# FASCICULE DE BREVET EUROPEEN

(11) **EP 0 440 310 B1**
(45) Date de publication et mention de la délivrance du brevet: **15.09.1993**
(21) Numéro de dépôt: 91200476.9
(22) Date de dépôt: 24.10.1989
(51) Int. Cl.: B67D 3/00, B65D 77/06, A23G 9/20

(54) **Procédé et installation de conservation et/ou distribution d'un produit liquide ou pâteux**
Verfahren und Einrichtung zum Konservieren und/oder Verteilen eines flüssigen oder pastösen Produkts
Method and installation for preserving and/or dispensing a liquid or viscous product

(30) Priorité: 28.10.1988 FR 8814149
(43) Date de publication de la demande: 07.08.1991
(62) Demande divisionnaire de: 89402928.9
(73) Titulaire: BONGRAIN, F-78280 Guyancourt (FR)
(72) Inventeur: Herpe, Michel, F-91400 Orsay (FR)
(74) Mandataire: Orès, Bernard

(56) Documents cités:
- EP-A- 0 053 813
- EP-A- 0 152 283
- DE-A- 2 165 334
- US-A- 3 185 348

## Description

L'invention a pour objet un procédé et une installation de conservation et distribution d'un produit liquide ou pâteux.

On connaît déjà, dans de nombreuses réalisations, des installations pour la distribution, à la demande, de doses individuelles d'un liquide (voir par exemple EP-A-0 252 420) ou d'un produit d'assaisonnement de la nourriture à consistance pâteuse (voir par exemple GB-A-2 154 204) ou encore d'un produit laitier frais comme du yaourt (voir par exemple FR-A-2 562 053). Dans l'installation que décrit ce dernier document, une capacité réfrigérée est chargée en yaourt liquide et des moyens sont prévus pour faire circuler à la demande une dose de yaourt depuis la réserve jusqu'à une mélangeuse où est introduit un produit aromatisant avant transfert d'une dose dans un gobelet de réception de mélange. La capacité réfrigérée, de même que les divers circuits sont périodiquement nettoyés par pulvérisation d'un liquide de lavage, puis d'un ou de produit(s) de rinçage. Pour s'affranchir des inconvénients que présentent ces opérations indispensables de nettoyage, les installations selon les deux documents mentionnés en premier lieu utilisent, pour des boissons carbonatées et pour des sauces d'assaisonnement, respectivement, un réservoir souple qui enferme le produit à distribuer lequel est extrait par gravité dans le cas des liquides et par une action mécanique dans le cas des sauces. De tels dispositifs de sac ou poche souple déformable connus dans la technique sous le nom anglais de "bag-in-a-box" ont été également proposés pour la distribution de doses unitaires de liquide ou de produit pâteux en tant que réservoirs jetables dont le contenu peut être soutiré à partir d'un tube de distribution souple après que le sac ait été introduit dans une machine comportant des moyens de réfrigération du contenu du sac (voir EP-A-0 152 283). Dans un autre dispositif connu, le contenu du sac ou poche déformable est soutiré à l'aide d'une pompe péristaltique (voir par exemple EP-A-0 053 813).

Si la distribution de liquides ou de certains produits pâteux à l'aide d'un dispositif tel que décrit dans le brevet européen mentionné en dernier lieu ne présente pas de difficultés, le dispositif n'est pas prévu pour assurer la conservation du produit, de sorte qu'il ne convient pas pour la distribution de produits laitiers frais, comme des yaourts ou pour la distribution de certains autres produits qu'ils soient alimentaires ou non et qui subissent une synérèse ou perdent leurs caractéristiques d'homogénéité, par exemple dans le cas d'émulsions en se séparant en plusieurs phases lors du stockage prolongé dans l'appareil ou l'installation de distribution.

C'est, par conséquent, un but général de l'invention de fournir un procédé et une installation particulièrement bien adaptés à la conservation et la distribution de produits liquides ou à consistance pâteuse dont les propriétés de texture, d'homogénéité, de consistance, de viscosité, de rhéologie, de stabilité, mais aussi organoleptiques, -dans le cas de produits alimentaires-, sont susceptibles de se modifier de façon importante au cours du stockage qui précède leur distribution.

C'est, de ce fait, un but de l'invention de fournir un procédé et un dispositif de conservation et distribution d'un produit liquide ou à consistance pâteuse sous forme de doses unitaires d'utilisation particulièrement simple, notamment en ce qu'ils permettent de s'affranchir des étapes de nettoyage des réserves de produits à distribuer, comme nécessaire dans certaines installations connues.

C'est, encore, un but de l'invention de fournir un procédé et un dispositif propres à trouver application aussi bien pour la distribution de produits délivrés à température ambiante qu'à une température plus élevée ou plus basse.

C'est, à cet égard, un but de l'invention de fournir un procédé et un dispositif qui permettent en outre de délivrer un produit de texture, consistance, et caractéristiques organoleptiques différentes de celles du produit ou des produits contenus dans la réserve mise en oeuvre.

C'est, enfin, un but de l'invention de fournir un procédé et un dispositif bien adaptés à la conservation et la distribution de produits du domaine alimentaire ou du domaine médical pour lesquels on exige que soient respectées non seulement des conditions d'hygiène, mais aussi des conditions plus sévères d'aseptie ou de protection à l'égard des germes microbiens ou analogues.

Un procédé selon l'invention, pour la conservation et la distribution d'un produit liquide ou à consistance pâteuse enfermé dans un sac souple déformable hors duquel il peut être extrait par actionnement d'un moyen de soutirage approprié et qui est mis en mouvement par une pompe, -aussi longtemps que le sac n'est pas entièrement vide-, dans un circuit en boucle fermée en partie extérieur audit sac, ledit circuit étant établi lors de la mise en place dudit sac dans un appareil de conservation et distribution, est caractérisé en ce que le soutirage est effectué à partir d'un conduit fermé aussi longtemps que ledit sac n'est pas mis en place dans ledit appareil de conservation et de distribution et en ce que l'on modifie au cours du soutirage la texture et/ou la consistance et/ou les caractéristiques organoleptiques du produit conservé dans le sac.

Il en résulte que le sac souple peut être rempli de produit à distribuer dans les meilleures conditions d'hygiène et d'aseptie d'une part, et que ces conditions sont conservées, d'autre part, tout au long de l'extraction du produit hors du sac.

Selon une autre caractéristique de l'invention, on associe audit circuit en boucle fermée des moyens de chauffage ou de refroidissement du produit à conserver et distribuer.

Selon encore une autre caractéristique de l'invention, on associe au conduit de soutirage des moyens propres à modifier la texture, la consistance, les caractéristiques organoleptiques, etc..., du produit conservé dans le sac souple, comme par exemple un dispositif de foisonnement et de réfrigération permettant d'obtenir et de distribuer en doses individuelles des yaourts glacés, ou frozen yogurts à partir d'une réserve de yaourt liquide ou pâteux.

Une installation pour la conservation et la distribution d'un produit liquide ou à consistance pâteuse à partir d'une réserve dudit produit enfermé dans un sac souple déformable hors duquel ledit produit peut être extrait à l'aide d'un moyen de soutirage approprié avec des moyens de dérivation associés à la réserve de produit et des moyens de pompe pour faire circuler suivant une boucle fermée en partie extérieure audit sac souple le produit contenu dans la réserve, est caractérisée en ce que le moyen de soutirage est propre à coopérer avec un conduit relié à la réserve de produit et dont l'extrémité distante du sac est fermée aussi longtemps que ledit sac n'est pas mis en place dans l'installation et en ce qu'elle comprend en outre des moyens propres à modifier la texture et/ou la consistance et/ou les caractéristiques organoleptiques du produit conservé dans le sac.

Une telle organisation de l'installation permet de régler la température du produit conservé et distribué de façon particulièrement avantageuse, le plus simplement en associant au tube souple de circulation continue ou discontinue du produit à l'extérieur du sac souple des moyens de chauffage ou de refroidissement.

Dans une forme de réalisation particulièrement avantageuse, les moyens permettant de modifier la texture, l'homogénéité, et/ou les qualités organoleptiques, ... etc, du produit contenu dans le sac souple, comprennent par exemple, un dispositif de foisonnement et de réfrigération auquel peut être relié le conduit de soutirage de la réserve, permettant ainsi de distribuer des doses individuelles de glace au yogourt, ou frozen yogurt à partir d'une réserve de yogourt liquide ou pâteux.

D'autres caractéristiques et avantages de l'invention apparaîtront de la description qui suit, faite à titre d'exemple et en référence au dessin annexé dans lequel :
- la figure 1 est une vue schématique, en coupe, d'une partie d'installation selon l'invention ;
- la figure 2 est une vue schématique d'une installation selon l'invention suivant la flèche A de la figure 1 ;
- la figure 3 est une vue schématique en perspective d'un bac de réception d'un sac propre à équiper une installation selon l'invention ;
- la figure 4 est un schéma illustrant le procédé selon l'invention ;
- la figure 5 est une vue schématique d'une réalisation préférée d'un sac souple formant réserve de produit à distribuer ;
- la figure 6 est une vue en coupe selon la ligne 6-6 de la figure 5 ;
- la figure 7 est une vue en perspective d'une forme de réalisation préférée d'une installation selon l'invention ;
- la figure 8 est une vue partielle, à grande échelle, d'une partie d'un sac propre à équiper une installation selon l'invention et de moyens de ladite installation ;
- la figure 9 est une vue schématique d'une partie d'une autre forme de réalisation d'installation selon l'invention.

Pour la conservation et la distribution d'un produit liquide ou à consistance pâteuse P, l'invention propose de faire application d'un sac souple s, du type de ceux utilisés dans la technique de l'emballage pour les systèmes dits "bag-in-a-box" et qui sont des poches ou enveloppes souples, jetables, à base d'un ou de film(s) de polyéthylène ou de matières plastiques analogues choisies en fonction de leurs propriétés de protection mais aussi de conservation et d'inocuité à l'égard de leur contenu. Conformément à l'invention, le sac souple s qui est destiné à équiper une installation de conservation et de distribution décrite plus en détail ci-après comprend deux embouts 10, 11 réunis entre eux, à l'extérieur du sac, par une canalisation comme un tube ou tuyau souple 13.

De façon plus précise, l'embout 11 comprend une platine 20 de fixation sur le sac s, percée d'un orifice central 21, et un manchon 22 de même diamètre que l'orifice 21 qui se termine à l'opposé dudit orifice par un téton 23. Sur le manchon 22 est ménagée, d'une part, une collerette 24 sensiblement parallèle à la platine 20 et à courte distance de celle-ci et, d'autre part, dirigé sensiblement perpendiculairement à l'axe X du manchon un second téton 25.

L'embout 10 est identique à l'embout 11 et ses parties constitutives portent les mêmes références frappées de l'indice '.

Conformément à l'invention, le téton 23' de l'embout 10 est relié par le tube ou tuyau souple 13 au téton 25 de l'embout 11 définissant ainsi à l'extérieur du sac s un trajet de circulation du produit P en boucle fermée entre les embouts 10 et 11, respectivement.

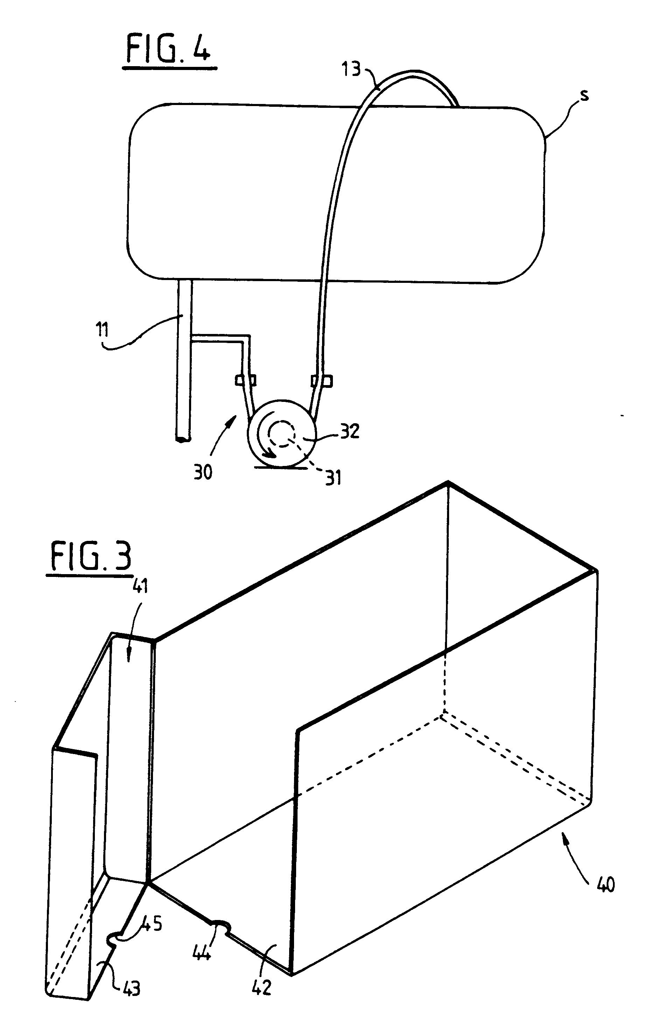

Pour la mise en mouvement du produit P dans ce circuit en boucle fermée, l'invention prévoit d'associer au tube ou tuyau souple 13 une pompe 30, avantageusement du type péristaltique, propre à être entraînée de façon intermittante ou continue par un moteur 31. Pour ce faire, et comme montré sur la figure 4, le tube ou tuyau souple 13 est le plus simplement mis en place autour du rotor 32 de la pompe péristaltique et la mise en route du moteur 31 provoque alors la circulation du produit P entre les embouts 10 et 11, des moyens de clapet antiretour, non représentés, étant éventuellement interposés à la sortie de la pompe 30.

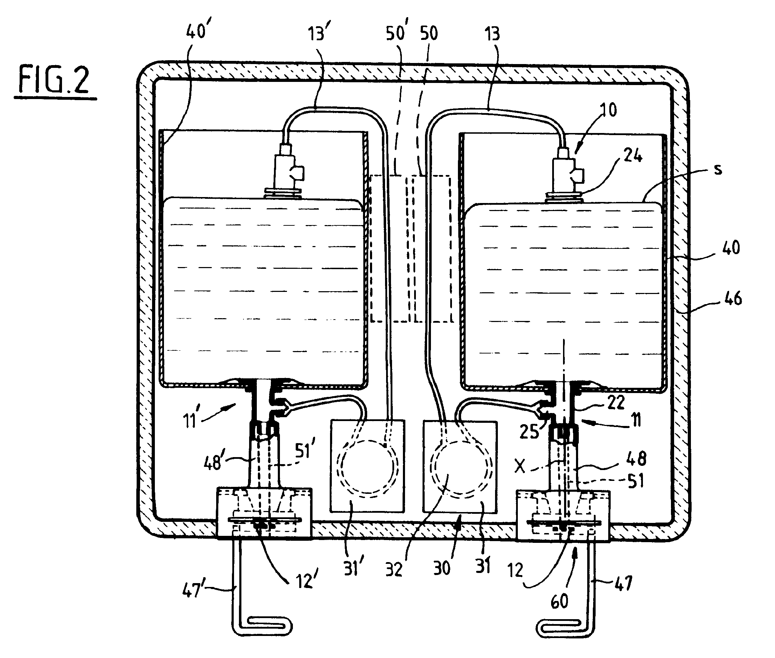

Pour faciliter l'utilisation d'une installation selon l'invention, on prévoit en outre de lui associer un bac ou boîte 40, figures 2 et 3, lequel est muni d'une porte pivotante 41 avec, dans le fond 42 du bac et le fond 43 de la porte, des découpes 44 et 45, respectivement, permettant le positionnement de l'embout 11 à l'aide d'un chevauchement du manchon 22 entre la platine 20 et la collerette 24.

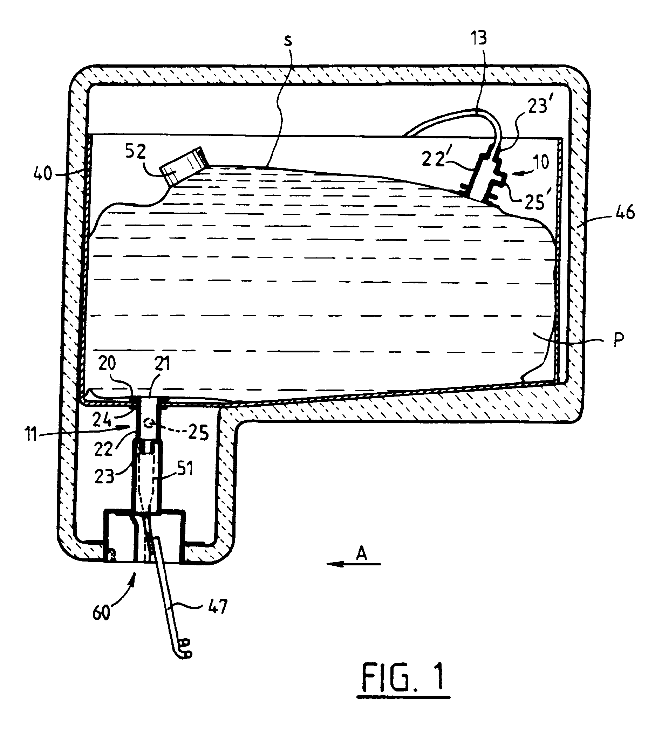

Dans la forme de réalisation de l'invention illustrée sur la figure 2 et qui vise une installation de distribution du produit P suivant des doses unitaires, l'installation comporte deux bacs ou boîtes 40 et 40' enfermés dans une enceinte isotherme 46 laquelle comprend également des moyens de soutirage 12, 12', -comme des robinets à bras d'actionnement 47 et 47' à organes de distribution en soi connus 48 et 48'-, coopérant avec des conduits 51 et 51' reliés aux embouts 11 et 11', respectivement. Comme également montré sur les figures 1 et 2 l'installation de distribution est avantageusement munie d'un dispositif de barrière aseptique, 60.

Lorsqu'une installation selon l'invention est destinée à la conservation et la distribution d'un ou de produits à une température plus élevée ou plus basse que la température ambiante, des moyens de chauffage ou de refroidissement montrés schématiquement sur la figure 2 en 50 et 50' peuvent être associés aux tubes ou tuyaux 13 et 13' de chacune des réserves de produits à distribuer.

Les étapes du procédé et le fonctionnement d'une installation selon l'invention découlent immédiatement de ce qui précède.

Le produit à conserver et à distribuer, par exemple du yaourt ou tout autre produit liquide ou à consistance pâteuse du domaine alimentaire ou médical (sans que ces indications aient quelque caractère limitatif que ce soit) est d'abord introduit par un nez 52 et avec les précautions d'usage habituelles en ce qui concerne l'hygiène et l'aseptie, notamment, dans un sac s et ce dernier, préalablement muni des embouts 10 et 11, du tube ou tuyau souple 13 qui les relient, et du conduit 51 dont l'extrémité distante du sac est fermée, est alors scellé.

Le cas échéant, un ou des gaz neutre(s) est (sont) introduit(s) dans le sac à la fin de l'opération de remplissage.

Le sac s est alors mis en place dans le bac ou boîte 40 mais avec le conduit 51 dont l'extrémité distante de l'embout 11 est fermée à l'extérieur dudit bac ou boîte.

Après que cette opération de positionnement du sac s dans la boîte 40 ait eu lieu, le plus simplement en ouvrant la porte 41 et en plaçant le manchon 22 dans les découpes 44 et 45, on dispose le tube ou tuyau souple 13 dans la pompe péristaltique 30, on abouche le conduit 51 préalablement ouvert aux organes comme 48 associés au robinet de soutirage 12 et on met en place le dispositif de barrière aseptique 60. La pompe 30 est alors mise en route et le produit P à conserver et à distribuer mis en mouvement de façon intermittente ou continue à l'extérieur du sac s et dans celui-ci, avec pour conséquence que ledit produit garde, au cours de sa durée de vie, ses propriétés de texture, d'homogénéité, de consistance, de viscosité, etc... indispensables à la conservation de ses caractéristiques organoleptiques dans le cas d'un produit alimentaire.

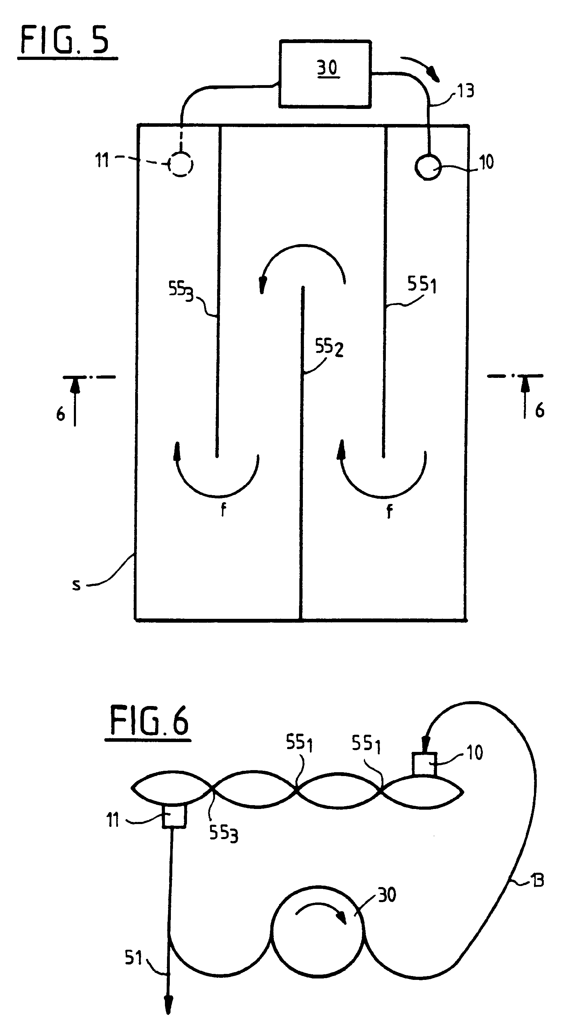

Pour encore améliorer la conservation des propriétés du produits P, l'invention prévoit avantageusement de conformer le sac s comme montré sur les figures 5 et 6, c'est-à-dire en formant à l'intérieur du sac même un circuit sinueux de circulation du produit P, le plus simplement en reliant par des lignes de soudure comme 55₁, 55₂, 55₃ les faces en regard du sac, lesdites lignes régnant sur une partie seulement de la hauteur du sac comme bien montré sur la figure 5 où le trajet sinueux est indiqué par les flèches f.

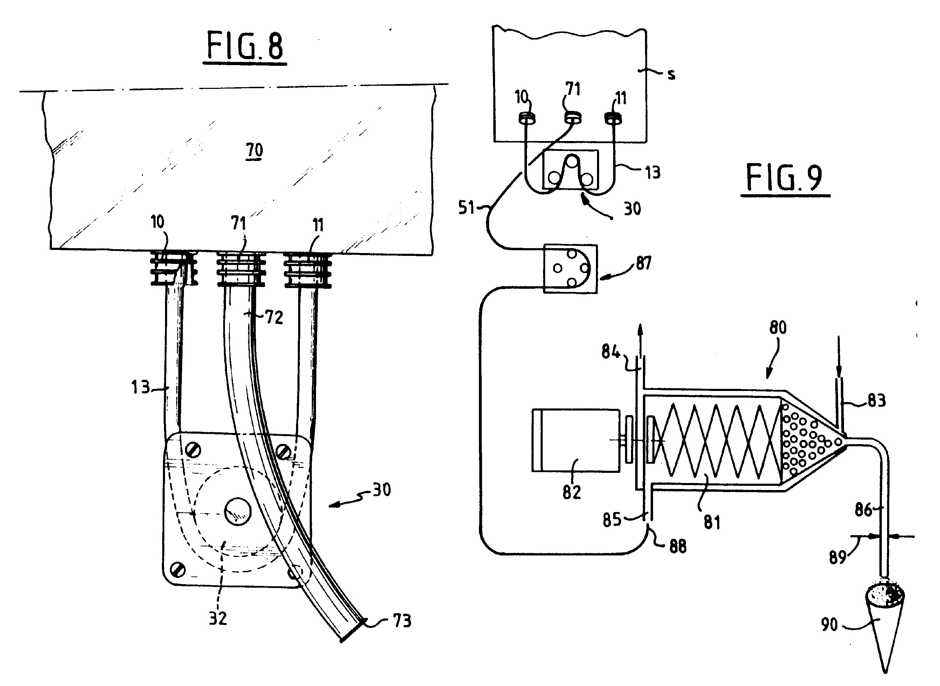

Dans une forme de réalisation préférée, le sac souple, le tube ou tuyau souple de circulation de produit à l'extérieur du sac, le conduit de distribution et les embouts sont réalisés sous forme d'un ensemble unitaire indémontable. Dans une telle réalisation, figure 8, le sac 70 constitué d'une enveloppe souple dont les faces en regard sont reliées, localement, par des lignes de soudure pour établir un circuit sinueux de circulation de produit P présente des embouts 10 et 11 thermosoudés en des zones peu distantes l'une de l'autre. Sur les embouts 10 et 11 sont également fixées, avantageusement par thermosoudage, les extrémités respectives du tube souple 13, avec lequel est propre à coopérer le rotor 32 de la pompe péristaltique 30. Sensiblement au milieu de la ligne reliant les embouts 10 et 11, un troisième embout 71 est également fixé par thermosoudage sur le sac 70 et sur cet embout est fixée de manière étanche l'extrémité 72 du conduit 51 dont l'autre extrémité 73 est scellée, aussi longtemps que le sac rempli de produit à distribuer n'est pas mis en place dans l'appareil de distribution.

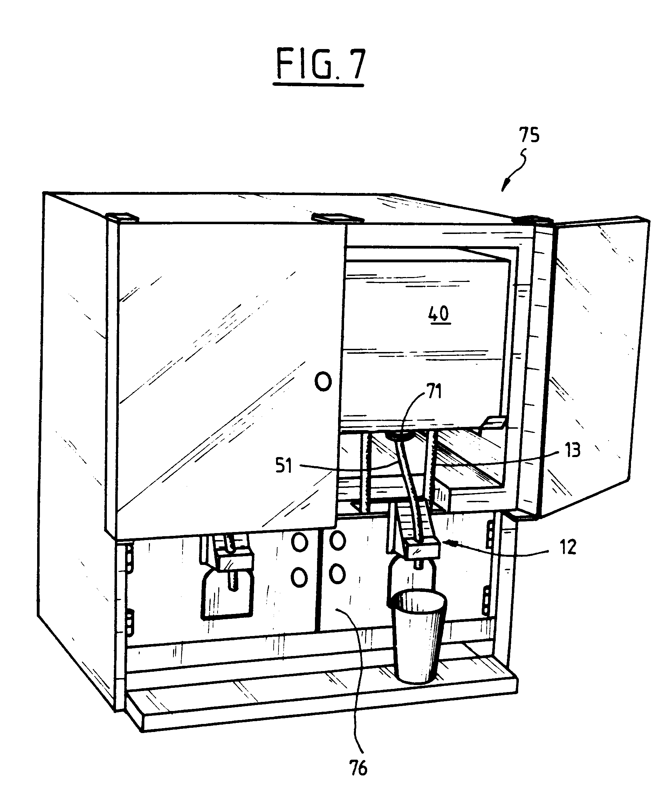

Lorsque ce dernier est prévu pour la mise en oeuvre de sacs du type de ceux qui viennent d'être décrits, son aspect général est comme montré sur la figure 7, c'est-à-dire d'une armoire 75 propre à recevoir deux boîtes ou bacs 40 enfermant chacun une réserve souple 70 d'où part un conduit 51 avec lequel coopère les moyens de soutirage 12, tandis que le tuyau souple 13 coopère avec la pompe péristaltique dissimulée derrière un volet 76.

Dans la forme de réalisation montrée sur la figure 9, l'installation du type de celles décrites ci-dessus comprend en outre des moyens 80 pour modifier la texture et/ou la consistance, et/ou les propriétés organoleptiques du produit distribué à partir de celui stocké dans la réserve s. Dans la forme de réalisation décrite et représentée, ces moyens comprennent un réacteur de foisonnement 81 entraîné par un moteur 82. Au réacteur 81 est associé un circuit réfrigérant, le plus simplement d'eau glycolée à -5°C circulant à contre-courant du produit à distribuer et qui comporte ainsi une arrivée 83 et une sortie 84 alors que l'arrivée du produit P, montrée en 85, est à l'aplomb de la sortie d'eau 84 et la sortie 86 du produit foisonné au voisinage de l'entrée 83 d'eau froide glycolée.

Dans cette forme de réalisation, après que le tube ou tuyau souple extérieur à la réserve s ait été amené à coopérer avec la pompe péristaltique 30, le conduit 51 de soutirage, -de plus grande longueur que celui des réalisations précédentes-, est amené lui aussi à coopérer avec une pompe péristaltique 87 avant d'être abouché par son extrémité 88 à l'entrée 85 du réacteur de foisonnement 81.

Une installation selon l'invention comprenant les moyens qui viennent d'être décrits permet alors, lorsque le contenu du sac s est, par exemple, du yaourt liquide ou pâteux de distribuer à l'aide des moyens de soutirage montrés schématiquement par la double flèche 89 des portions individuelles 90 de glaces ou yaourts, ou frozen yogurt et cela de façon simple, sûre et hygiénique.

## Revendications

1. Procédé pour la conservation et la distribution d'un produit liquide ou à consistance pâteuse (P) enfermé dans un sac souple déformable (s) hors duquel il peut être extrait par actionnement d'un moyen de soutirage approprié (12) et qui est mis en mouvement par une pompe, -aussi longtemps que le sac n'est pas entièrement vide-, dans un circuit en boucle fermée en partie extérieur audit sac, ledit circuit étant établi lors de la mise en place dudit sac (s) dans un appareil de conservation et distribution, caractérisé en ce que le soutirage est effectué à partir d'un conduit (51) fermé aussi longtemps que ledit sac (s) n'est pas mis en place dans ledit appareil de conservation et de distribution et en ce que l'on modifie au cours du soutirage la texture et/ou la consistance et/ou les caractéristiques organoleptiques du produit conservé dans le sac.

2. Installation pour la conservation et la distribution d'un produit liquide ou à consistance pâteuse (P) à partir d'une réserve dudit produit enfermé dans un sac souple déformable (s) hors duquel ledit produit peut être extrait à l'aide d'un moyen de soutirage approprié (12), avec des moyens de dérivation associés à la réserve de produit et des moyens de pompe (30) pour faire circuler suivant une boucle fermée en partie extérieure audit sac souple déformable (s) le produit (P) contenu dans la réserve, caractérisée en ce que le moyen de soutirage est propre à coopérer avec un conduit (51) relié à la réserve de produit (P) et dont l'extrémité libre est fermée aussi longtemps que le sac (s) n'est pas mis en place dans l'installation, et en ce qu'elle comprend en outre des moyens (80, 81, 82,...) propres à modifier la texture et/ou la consistance et/ou les caractéristiques organoleptiques du produit conservé dans le sac (s).

3. Installation selon la revendication 2, caractérisée en ce que lesdits moyens comportent un réacteur de foisonnement (81) et un circuit réfrigérant (83, 84) pour permettre de délivrer, à partir d'une réserve de yogourt, des glaces au yogourt, ou frozen yogurt (90).

## Patentansprüche

1. Verfahren zum Frischhalten und zur Abgabe eines flüssigen oder dickflüssigen Stoffes (P), der in einem weichen deformierbaren Beutel (s) eingeschlossen ist, aus welchem er durch Betätigung eines geeigneten Entnahmemittels (12) entnommen werden kann, und der durch eine Pumpe in einem geschlossenen Kreislauf zum Teil außerhalb dieses Vorrats bewegt wird, -solange der Vorrat nicht gänzlich geleert ist-, wobei dieser Kreislauf nach Anbringen des Beutels (s) an ein Frischhalte- und Abgabegerät hergestellt wird, **dadurch** **gekennzeichnet, daß** die Entnahme aus einer Leitung (51) erfolgt, die geschlossen ist, solange der Beutel nicht an dem Frischhalte- und Abgabegerät angebracht ist, und daß im Lauf der Entnahme die Struktur und/oder die Konsistenz und/oder die Geschmackseigenschaften des in dem Beutel frischgehaltenen Stoffes verändert werden.

2. Einrichtung zum Frischhalten und zur Abgabe eines flüssigen oder dickflüssigen Stoffes (P) mit einem Vorrat dieses Stoffes, der in einem deformierbaren Beutel (s) enthalten ist, aus welchem dieser Stoff mit Hilfe eines geeigneten Entnahmemittels (12) entnommen werden kann, mit Ableitungsmitteln, die dem Vorrat des Stoffes zugeordnet sind, und mit Pumpmitteln (30), um den in dem Vorrat enthaltenen Stoff (P) zum Teil außerhalb dieses weichen Beutels (s) in einem geschlossenen Kreislauf zirkulieren zu lassen, **dadurch** **gekennzeichnet, daß** das Entnahmemittel mit einer Leitung (51) zusammenwirken kann, die mit dem Vorrat des Stoffes (P) verbunden ist und deren freies Ende verschlossen ist, solange der Beutel (s) nicht an der Einrichtung angebracht ist, und daß sie weiters Mittels (80, 81, 82, ...) aufweist, die dazu geeignet sind, die Struktur und/oder die Konsistenz und/oder die Geschmackseigenschaften des in dem Beutel (s) frischgehaltenen Stoffes zu verändern.

3. Einrichtung nach Anspruch 2, **dadurch gekennzeichnet, daß** die genannten Mittel einen Rührbehälter (81) und einen Kühlkreislauf (83, 84) aufweisen, um die Herstellung von Yoghurteis oder Frozen Yogurt (90) aus einem Yoghurtvorrat zu ermöglichen.

## Claims

1. A method of conserving and distributing a liquid product or a product of a pasty consistency (P) enclosed in a deformable flexible bag (s) from which it may be extracted by the actuation of a suitable withdrawal means (12) and which is set in motion by a pump - for as long as the bag is not entirely empty - in a closed loop circuit partly outside the said bag, the said circuit being established when the said bag (s) is placed in position in a conserving and distributing apparatus, characterised in that withdrawal is performed from a pipe (51) which is closed for as long as the said bag (s) is not in place in the said conserving and distributing apparatus and in that during the course of withdrawal, the texture and/or consistency and/or organoleptic characteristics of the product kept in the bag are altered.

2. An installation for conserving and distributing a liquid product or a product of a pasty consistency (P) from a reserve of the said product enclosed in a deformable flexible bag (s) from which the said product can be extracted by means of a suitable withdrawal means (12), with branching means associated with the reserve of product and pump means (30) for causing the product (P) contained in the reserve to circulate according to a closed loop partly outside the said deformable plastic bag (s), characterised in that the withdrawal means are adapted to cooperate with a pipe (51) connected to the reserve of product (P) and of which the free end is closed for as long as the bag (s) is not in place in the installation and in that it comprises furthermore means (80, 81, 82,...) adapted to alter the texture and/or consistency and/or the organoleptic characteristics of the product kept in the bag (s).

3. An installation according to Claim 2, characterised in that the said means comprise a swelling reactor (81) and a refrigerating circuit (83, 84) which make it possible to deliver yogurt ices or frozen yogurt (90) from a reserve of yogurt.
